# EUROPEAN PATENT APPLICATION

(11) **EP 4 723 024 A1**
(43) Date of publication of application: **08.04.2026**
(21) Application number: 24814949.4
(22) Date of filing: 26.03.2024
(51) Int. Cl.: G06Q 50/18

(54) **PROGRAM, INFORMATION PROCESSING METHOD, AND INFORMATION PROCESSING DEVICE**

(30) Priority: 26.05.2023 JP 2023086906
(71) Applicant: Sony Group Corporation, Tokyo 108-0075 (JP)
(72) Inventor: ASAUMI, Yoshiya, Tokyo 108-0075 (JP); KURATA, Masatomo, Tokyo 108-0075 (JP); MARUYAMA, Shinya, Tokyo 108-0075 (JP); GOKAN, Kenichi, Tokyo 102-8353 (JP); UMEHARA, Yu, Tokyo 108-0075 (JP); YAMAJI, Yoshio, Tokyo 108-0075 (JP)
(74) Representative: MFG Patentanwälte Meyer-Wildhagen Meggle-Freund Gerhard PartG mbB
(86) International application number: PCT/JP2024/012116
(87) International publication number: WO 2024/247462

(57) **Abstract**

A program for causing a computer to function as: an acquisition unit that acquires information regarding a percentage of rights of each of creators of a collaborative work via a chat between the creators; an information generation unit that generates information for recording the information regarding the percentages of the rights in a blockchain; and an agreement generation unit that generates an agreement regarding the percentages of the rights based on the information regarding the percentages of the rights and an agreement status of each of the creators regarding the percentages of the rights.

## Description

### Field

The present disclosure relates to a program, an information processing method, and an information processing apparatus.

### Background

In recent years, it has been studied to leave a trail of a contract made between a plurality of persons by using a blockchain (see, for example, Patent Literature 1 described below).

The blockchain is a transaction ledger in which blocks storing transaction records called transactions are linked in a chain manner. The blockchain may ensure the integrity of the contents of the transactions through a process of consensus building in a network. Therefore, by recording, as a transaction, a contract and information regarding agreement on the contract in the blockchain, it is possible to ensure the integrity of the content of the contract and leave a trail of the agreement on the content of the contract.

### Citation List

### Patent Literature

Patent Literature 1: JP 2017-220710 A

### Summary

### Technical Problem

Here, in a case where a plurality of creators collaboratively create a copyrighted work or the like, each of the creators may jointly own the rights in the created copyrighted work. In this case, it is important that the plurality of creators negotiate on percentages of the rights before creating the copyrighted work and determine the percentage of the rights to be owned by each of the creators. However, in a case where the percentages of the rights are negotiated orally or by e-mail, it is difficult to leave agreement on the percentages of the rights in the created copyrighted work as a trail ensuring integrity.

Therefore, it has been required to leave a trail of agreement on the percentages of the rights in the work collaboratively created by the plurality of creators with integrity-ensured means such as a blockchain.

### Solution to Problem

According to the present disclosure, there is provided a program for causing a computer to function as an acquisition unit that acquires information regarding a percentage of rights of each of creators of a collaborative work via a chat between the creators, an information generation unit that generates information for recording the information regarding the percentages of the rights in a blockchain, and an agreement generation unit that generates an agreement regarding the percentages of the rights based on the information regarding the percentages of the rights and an agreement status of each of the creators regarding the percentages of the rights.

Also, according to the present disclosure, there is provided an information processing method by a computer, comprising acquiring information regarding a percentage of rights of each of creators of a collaborative work via a chat between the creators, generating information for recording information regarding the percentages of the rights in a blockchain, and generating an agreement regarding the percentages of the rights based on the information regarding the percentages of the rights and an agreement status of each of the creators regarding the percentages of the rights.

Also, according to the present disclosure, there is provided an information processing apparatus comprising an acquisition unit that acquires information regarding a percentage of rights of each of creators of a collaborative work via a chat between the creators, an information generation unit that generates information for recording the information regarding the percentages of the rights in a blockchain, and an agreement generation unit that generates an agreement regarding the percentages of the rights based on the information regarding the percentages of the rights and an agreement status of each of the creators regarding the percentages of the rights.

### Brief Description of Drawings

FIG. 1 is a block diagram illustrating an overall outline of an information processing system according to an embodiment of the present disclosure.
FIG. 2 is a block diagram illustrating a functional configuration of a collaborative application.
FIG. 3 is a diagram illustrating an example of an application image presented to a creator by the collaborative application.
FIG. 4 is a sequence diagram illustrating an operation of the information processing system from the start of a project for collaborative creation to recording of information regarding a contract condition in a blockchain.
FIG. 5 is a diagram illustrating an example of an image displayed in a determination area of an application image in a case where a first creator enters percentages of rights.
FIG. 6 is a diagram illustrating an example of an image displayed in the determination area of the application image in a case where a second creator and a third creator agree on or reject the percentages of the rights.
FIG. 7 is a diagram illustrating an example of an image displayed in a communication area of the application image for negotiation on a contract condition.
FIG. 8 is a diagram illustrating an example of an image displayed in the communication area of the application image for agreement on the contract condition.
FIG. 9 is a sequence diagram illustrating an operation of the information processing system to record information regarding agreement on the contract condition in the blockchain.
FIG. 10 is a sequence diagram illustrating an operation of the information processing system to record information regarding a final work of a collaborative work and agreement on the final work in the blockchain.
FIG. 11 is a diagram illustrating an example of an image displayed in the determination area of the application image in a case where the first creator determines the final work.
FIG. 12 is a diagram illustrating an example of an image displayed in the determination area of the application image in a case where the second creator and the third creator agree on or reject the final work.
FIG. 13 is a sequence diagram illustrating an operation of the information processing system to create a split sheet.
FIG. 14 is a diagram illustrating an example of an image displayed in the determination area of an application image in a case where the first creator readjusts the percentages of the rights during creation of the split sheet.
FIG. 15 is a diagram illustrating an example of an image displayed in the determination area of the application image in a case where the second creator and the third creator agree on or reject the readjusted percentages of the rights.
FIG. 16 is a diagram illustrating an example of an image displayed in the communication area of the application image for creation of the split sheet.
FIG. 17 is a diagram illustrating an example of the created split sheet.
FIG. 18 is a sequence diagram illustrating an operation of the information processing system to create the split sheet in a case where a minimum percentage of the rights is guaranteed.
FIG. 19 is a block diagram illustrating an example of a hardware configuration of an information processing apparatus in which the collaborative application runs.
FIG. 20 is a block diagram illustrating an outline of information processing according to a modification.
FIG. 21 is a block diagram illustrating an outline of collaborative creation according to the modification.
FIG. 22 is a flowchart (1) illustrating a processing procedure according to the modification.
FIG. 23 is a flowchart (2) illustrating the processing procedure according to the modification.
FIG. 24 is a flowchart (3) illustrating the processing procedure according to the modification.
FIG. 25 is a flowchart (4) illustrating the processing procedure according to the modification.

### Description of Embodiments

Hereinafter, preferred embodiments of the present disclosure will be described in detail with reference to the accompanying drawings. Note that, in the present specification and the drawings, components having substantially the same functional configurations are denoted by the same reference signs, and redundant description is omitted.

Note that the description will be given in the following order.
1. Overall configuration of information processing system
2. Configuration of collaborative application
3. Images presented by collaborative application
4. Operation of information processing system
   4.1. Recording of contract condition for collaborative work in blockchain
   4.2. Recording of collaborative work in blockchain
   4.3. Issuance of split sheet
   4.4. Case where minimum percentage of rights is guaranteed
   4.5. Appendix
5. Hardware configuration
6. Modification
   6.1. Background
   6.2. Pre-registration of work in blockchain
   6.3. Aspect of collaborative creation
   6.4. Example of processing procedure according to modification
   6.5. System configuration according to modification
   6.6. Effects of modification

### <1. Overall configuration of information processing system>

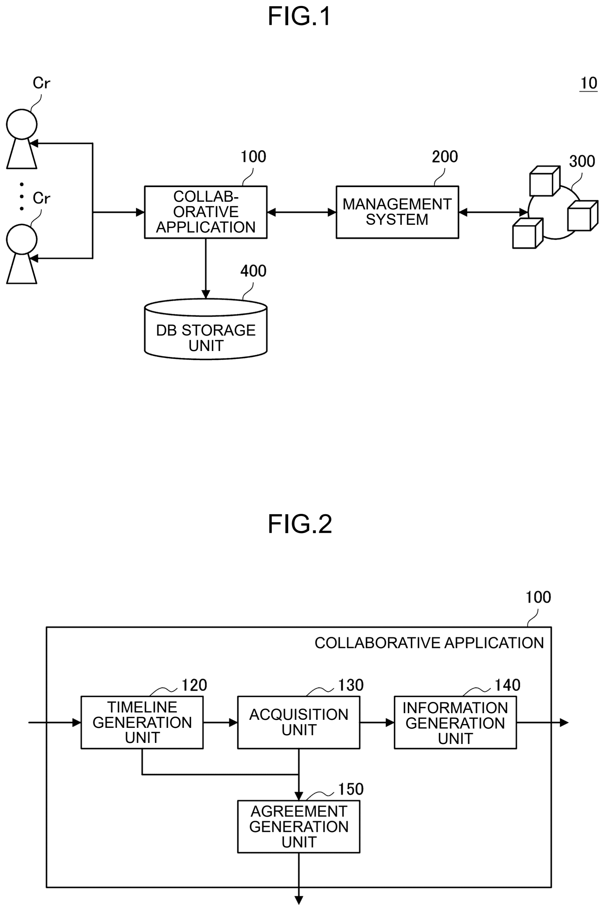

An overall outline of an information processing system according to an embodiment of the present disclosure will be described with reference to FIG. 1. FIG. 1 is a block diagram illustrating the overall outline of the information processing system 10 according to the present embodiment.

As illustrated in FIG. 1, the information processing system 10 includes a collaborative application 100, a DB storage unit 400, a management system 200, and a blockchain 300.

The collaborative application 100 is a program that is used by a plurality of creators Cr who perform collaborative creation. For example, the collaborative application 100 provides a communication interface for setting, negotiating on, and agreeing on the content of a contract regarding creation of a collaborative work by the plurality of creators Cr. Furthermore, the collaborative application 100 may provide a communication interface for exchanging messages and data for creation of the collaborative work by the plurality of creators Cr.

Furthermore, the collaborative application 100 can generate an agreement (also referred to as a split sheet) describing a percentage of rights of each of the creators Cr of the collaborative work that has been agreed between the plurality of creators Cr. According to this, each of the creators Cr who perform the collaborative creation can negotiate on the percentages of the rights in the collaborative work with the other creators Cr and document the percentages of the rights agreed in the negotiation as the split sheet via the collaborative application 100.

The DB storage unit 400 stores the agreement (split sheet) describing the percentage of the rights of each of the creators Cr of the collaborative work that has been agreed between the plurality of creators Cr. The validity and integrity of the content of the split sheet stored in the DB storage unit 400 are secured by the blockchain 300 described later. In addition, the DB storage unit 400 may further store a contract document regarding the creation of the collaborative work.

The management system 200 is a system that manages transactions to the blockchain 300. The management system 200 records, in the blockchain 300 as a transaction, information proving the validity and integrity of the content of the split sheet of the collaborative work. For example, the management system 200 may record, in the blockchain 300 as a transaction, information regarding the agreed percentage of the rights of each of the creators Cr of the collaborative work. According to this, the management system 200 can verify the validity and integrity of the content (that is, the percentage of the rights of each of the creators Cr of the collaborative work) of the split sheet generated by the collaborative application 100 based on the information recorded in the blockchain 300.

Furthermore, the management system 200 may record, in the blockchain 300 as a transaction, the content of the contract document regarding the creation of the collaborative work or information regarding the created collaborative work.

The blockchain 300 is a distributed ledger managed by a peer-to-peer network. In a block of the blockchain 300, information regarding the percentage of the rights of each of the creators Cr of the collaborative work, that is, information proving the validity and integrity of the content of the split sheet, is recorded as a transaction. Since it is difficult to falsify the information recorded in the blockchain 300, the creators Cr of the collaborative work can guarantee valid percentages of the rights in the collaborative work owned by the creators Cr by using the information recorded in the blockchain 300 as evidence.

According to the information processing system 10 according to the present embodiment, the creators Cr of the collaborative work can leave a trail of the percentages of the rights in the collaborative work for the creators Cr and agreement on the percentages of the rights in the blockchain 300. Therefore, the creators Cr of the collaborative work can guarantee the percentages of the rights in the collaborative work for the creators Cr. Therefore, the information processing system 10 according to the present embodiment can reduce troubles regarding the rights in the collaborative work created by the plurality of creators Cr.

### <2. Configuration of collaborative application>

A functional configuration of the collaborative application 100 will be described with reference to FIG. 2. FIG. 2 is a block diagram illustrating the functional configuration of the collaborative application 100.

As illustrated in FIG. 2, the collaborative application 100 includes a timeline generation unit 120, an acquisition unit 130, an information generation unit 140, and an agreement generation unit 150.

The timeline generation unit 120 generates a timeline in a chat format in which messages and data are exchanged between the plurality of creators Cr who perform the collaborative creation. Specifically, the timeline generation unit 120 may generate a timeline that displays a message and data transmitted by a creator Cr himself/herself who operates the collaborative application 100 on one side and displays a message and data transmitted by another creator Cr on the other side. According to this, the collaborative application 100 can display a history of exchange of messages and data between the plurality of creators Cr in time series.

Note that a log of the timeline generated by the timeline generation unit 120 may be stored in the DB storage unit 400, for example. According to this, the plurality of creators Cr can check and verify the exchange and the status of the exchange for the collaborative creation at a later date.

The acquisition unit 130 acquires information regarding the percentage of the rights of each of the creators Cr of the collaborative work via a chat between the creators Cr on the timeline generated by the timeline generation unit 120. The percentage of the rights of each of the creators Cr of the collaborative work may be negotiated via a chat between the creators Cr. The percentage of the rights of each of the creators Cr of the collaborative work may be expressed as, for example, percentages with the sum of the percentages of the rights being 100, or may be expressed as ratios that do not add up to 100.

The information generation unit 140 generates information for recording the information, acquired by the acquisition unit 130, regarding the percentages of the rights in the collaborative work in the blockchain 300. The management system 200 can record the information regarding the percentages of the rights in the collaborative work as a transaction in the blockchain 300 based on the information generated by the information generation unit 140.

Furthermore, the information generation unit 140 may further generate information for recording, in the blockchain 300, information regarding an agreement status of each of the creators Cr regarding the percentages of the rights in the collaborative work. The management system 200 can record, in the blockchain 300 as a transaction, information indicating that each of the creators Cr has agreed on the percentages of the rights in the collaborative work based on the information generated by the information generation unit 140.

Furthermore, when the agreed percentages of the rights in the collaborative work are readjusted, the information generation unit 140 may further generate information for recording information regarding the readjusted percentages of the rights in the collaborative work in the blockchain 300. Furthermore, the information generation unit 140 may further generate information for recording, in the blockchain 300, information regarding an agreement status of each of the creators Cr regarding the readjusted percentages of the rights in the collaborative work. According to this, the information generation unit 140 can generate information for recording a history of setting, agreement, and readjustment of the percentages of the rights in the collaborative work and agreement after the readjustment in the blockchain 300.

In addition, the information generation unit 140 may further generate information for recording information regarding the final work of the collaborative work in the blockchain 300 after the completion of the creation of the collaborative work. The final work of the collaborative work is determined based on the agreement of each of the creators Cr. The information regarding the final work of the collaborative work may include identification information of the collaborative work, identification information of the creators Cr of the collaborative work, and a hash value of the final work.

The agreement generation unit 150 generates the split sheet of the collaborative work based on the information regarding the percentages of the rights in the collaborative work and the agreement status of each of the creators Cr regarding the percentages of the rights. Specifically, in a case where the percentage of the rights is set for each of the creators Cr of the collaborative work and the set percentages of the rights are agreed by each of the creators Cr, the agreement generation unit 150 generates the split sheet indicating the agreed percentages of the rights in the collaborative work.

The information regarding the percentage of the rights of each of the creators Cr of the collaborative work and the information regarding the agreement status of each of the creators Cr regarding the percentages of the rights are recorded in the blockchain 300. Therefore, it is possible to verify the integrity and validity of the content of the split sheet generated by the agreement generation unit 150 from the information recorded in the blockchain 300.

The collaborative application 100 including the above-described configuration allows the collaborative creation to be smoothly performed by the plurality of creators Cr by exchanging messages and data between the plurality of creators Cr in the timeline in the chat format.

Furthermore, the collaborative application 100 can record, in the blockchain 300 via the management system 200, information regarding the percentage of the rights of each of the creators Cr of the collaborative work and information regarding the agreement status of each of the creators Cr regarding the percentages of the rights. According to this, the collaborative application 100 can leave, on the blockchain 300, a trail of the percentage of the rights of each of the creators Cr of the collaborative work and the agreement status of each of the creators Cr regarding the percentages of the rights. Therefore, by referring to the information recorded in the blockchain 300, the creators Cr of the collaborative work can prove the integrity and validity of the split sheet describing the percentages of the rights in the collaborative work.

### <3. Images presented by collaborative application>

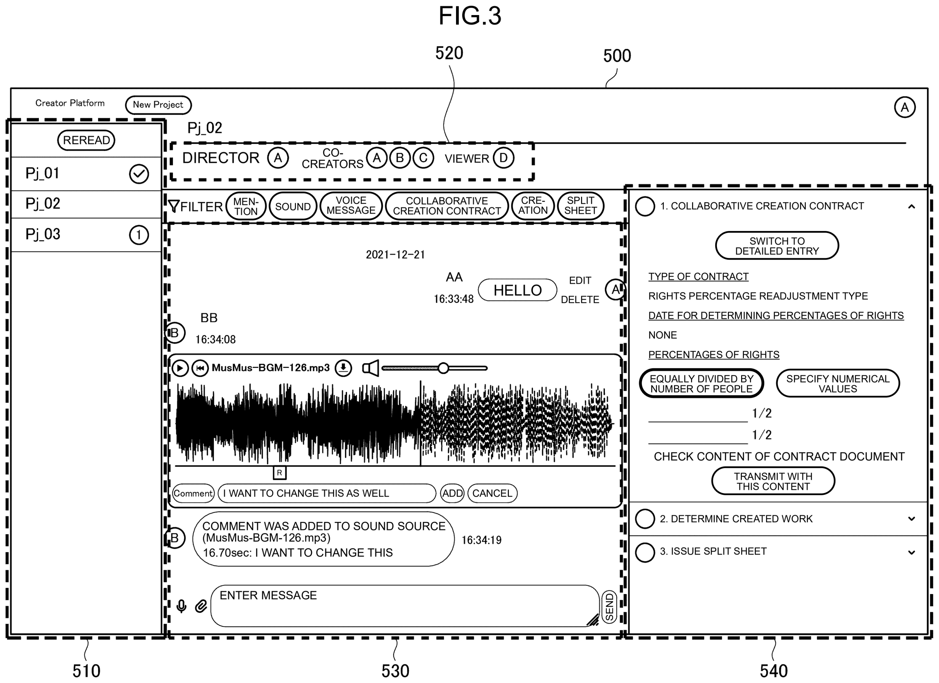

Images presented to the creators Cr by the collaborative application 100 will be described with reference to FIG. 3. FIG. 3 is a diagram illustrating an example of an application image 500 presented to the creators Cr by the collaborative application 100.

As illustrated in FIG. 3, the application image 500 presented to a creator Cr ("AA" in FIG. 3) by the collaborative application 100 includes a project selection area 510, a member display area 520, a communication area 530, and a determination area 540.

The project selection area 510 is an area for switching the content of a project displayed in the member display area 520, the communication area 530, and the determination area 540. In the project selection area 510, collaborative projects in which the creator Cr ("AA" in FIG. 3) participates are displayed in a tab format. The creator Cr can switch the content of the project displayed in the member display area 520, the communication area 530, and the determination area 540 by selecting a tab displayed in the project selection area 510.

In the application image 500 in FIG. 3, three projects of "Pj_01", "Pj_02", and "Pj_03" are displayed as the collaborative projects in which the creator Cr ("AA" in FIG. 3) participates. The creator Cr can switch the content displayed in the member display area 520, the communication area 530, and the determination area 540 by selecting tabs of "Pj_01", "Pj_02", and "Pj_03" in the project selection area 510. Note that, in the application image 500 in FIG. 3, "Pj_02" is selected, and the content of "Pj_02" is displayed in the member display area 520, the communication area 530, and the determination area 540.

Furthermore, in the project selection area 510, a check mark may be attached to a finished project ("Pj_01" in FIG. 3), and an icon indicating the number of unread messages may be attached to a project for which an unread message is present ("Pj_03" in FIG. 3).

The member display area 520 is an area in which members participating in the project selected in the project selection area 510 are indicated by icons. In the application image 500 in FIG. 3, a member (director "AA") who launched the project is displayed with an icon of "A", members (co-creators "AA", "BB", "CC") who perform the collaborative creation are displayed with icons of "A", "B", and "C", and a member (viewer "DD") who can view the content of the project without participating in the collaborative creation is displayed with an icon of "D".

In the communication area 530, the timeline in the chat format generated by the timeline generation unit 120 is displayed. Specifically, in the communication area 530, messages and data exchanged between the plurality of creators Cr who perform the collaborative creation are displayed side by side in time series. In the communication area 530, a message and data transmitted by the creator Cr ("AA" in FIG. 3) are displayed on one side, and a message and data transmitted by another creator Cr ("BB" and "CC" in FIG. 3) are displayed on the other side.

The determination area 540 is an area for determining a contract condition and the like for the collaborative project. For example, in the determination area 540, in an item "1. Collaborative creation contract", the contract condition for the collaborative creation that includes the percentages of the rights in the collaborative work is entered by the member (director) who launched the project. In addition, in an item "2. Determination of work", the final work of the collaborative work is determined after the completion of the collaborative creation. Furthermore, in an item "3. Issuance of split sheet", an instruction for issuing the split sheet in which the percentages of the rights in the collaborative work are described is entered.

The contract condition entered in the item "1. Collaborative creation contract" is, for example, "pre-contract rights percentage priority type", "rights percentage readjustment type", or "minimum rights percentage guaranteed type". The "pre-contract rights percentage priority type" is a contract condition that the percentage of the rights of each of the creators Cr is determined before the collaborative creation. The "rights percentage readjustment type" is a contract condition that the percentage of the rights of each of the creators Cr can be determined before the collaborative creation and the percentage of the rights of each of the creators Cr can be readjusted after the collaborative creation. The "minimum rights percentage guaranteed type" is a contract condition that the percentage of the rights and a minimum percentage of the rights of each of the creators Cr are determined before the collaborative creation and the percentages of the rights equal to or higher than the minimum percentage of the rights are guaranteed when the percentage of the rights of each of the creators Cr is readjusted after the collaborative creation. The member (director) who launched the project can select and enter a contract condition including the percentage of the rights of each of the creators Cr from among the above-described conditions.

The collaborative application 100 can support the collaborative creation by the plurality of creators Cr via the application image 500.

### <4. Operation of information processing system>

### (4.1. Recording of contract condition for collaborative work in blockchain)

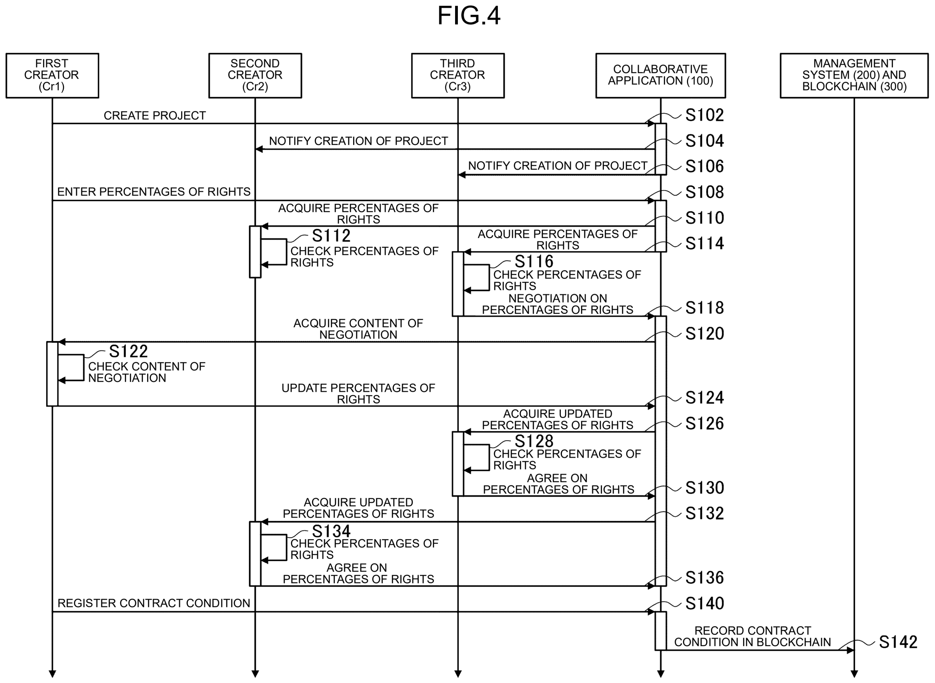

With reference to FIGS. 4 to 9, an operation of the information processing system 10 from the start of the collaborative project to the recording of information regarding the contract condition and information regarding the agreement on the contract condition in the blockchain 300 will be described.

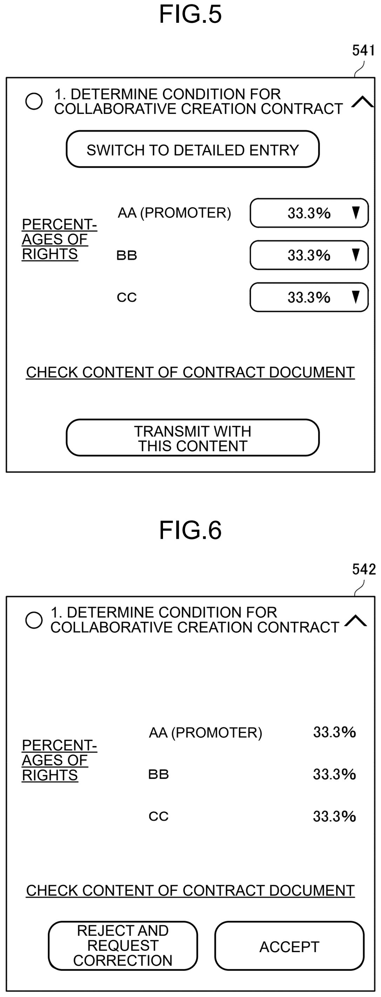

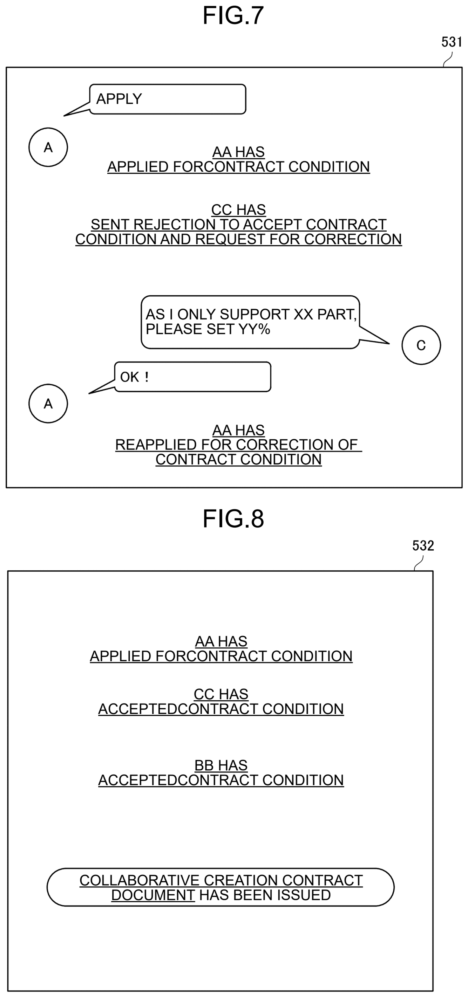

FIG. 4 is a sequence diagram illustrating the operation of the information processing system 10 from the start of the collaborative project to recording of the information regarding the contract condition in the blockchain 300. FIG. 5 is a diagram illustrating an example of an image displayed in the determination area 540 of the application image 500 in a case where a first creator Cr1 enters the percentages of the rights. FIG. 6 is a diagram illustrating an example of an image displayed in the determination area 540 of the application image 500 in a case where a second creator Cr2 and a third creator Cr3 agree on or reject the percentages of the rights. FIG. 7 is a diagram illustrating an example of an image displayed in the communication area 530 of the application image 500 for negotiation on the contract condition. FIG. 8 is a diagram illustrating an example of an image displayed in the communication area 530 of the application image 500 for agreement on the contract condition.

As illustrated in FIG. 4, first, the collaborative project is created in the collaborative application 100 by the first creator Cr1 (director) (S102). Subsequently, a notification for notifying the creation of the project is transmitted to the second creator Cr2 and the third creator Cr3 selected as members (co-creators) who participate in the created project (S104, S106).

Next, the first creator Cr1 enters the contract condition including the percentages of the rights in the collaborative work in the collaborative application 100 (S108). Specifically, the first creator Cr1 may enter the contract condition of the "pre-contract rights percentage priority type", the "rights percentage readjustment type", or the "minimum rights percentage guaranteed type" in the determination area 540 of the application image 500, and may further enter the percentages of the rights in the collaborative work for the respective creators Cr. For example, the first creator Cr1 "AA" may enter equal percentages of "33.3%" as the percentages of the rights of the first creator Cr1 "AA", the second creator Cr2 "BB", and the third creator Cr3 "CC" as in an image 541 illustrated in FIG. 5.

Subsequently, the second creator Cr2 acquires the contract condition including the percentages of the rights in the collaborative work that have been entered by the first creator Cr1 via the collaborative application 100 (S110), and checks the acquired percentages of the rights (S112). Similarly, the third creator Cr3 acquires the contract condition including the percentages of the rights in the collaborative work that have been entered by the first creator Cr1 via the collaborative application 100 (S114), and checks the acquired percentages of the rights (S116).

For example, the second creator Cr2 and the third creator Cr3 are presented with the percentages of the rights in the collaborative work that have been entered by the first creator Cr1 in an image 542 illustrated in FIG. 6. The second creator Cr2 and the third creator Cr3 can indicate whether to accept or reject the presented percentages of the rights in the collaborative work by selecting either "accept" or "reject and request correction" in the image 542 illustrated in FIG. 6.

Here, it is assumed that the third creator Cr3 selects "reject and request correction" in the image 542 illustrated in FIG. 6. The selection of "reject and request correction" by the third creator Cr3 "CC" is transmitted to the first creator Cr1 "AA" via the communication area 530 as in an image 531 illustrated in FIG. 7. Thereafter, the third creator Cr3 "CC" may negotiate on a desired percentage of the rights with the first creator Cr1 "AA" via the chat in the communication area 530 (S118).

The first creator Cr1 acquires the content of the negotiation from the third creator Cr3 via the communication area 530 of the collaborative application 100 (S120), and checks the content of the negotiation (S122). As a result, the first creator Cr1 updates the percentages of the rights in the collaborative work that have been entered in the determination area 540 of the collaborative application 100 (S124).

After updating the percentages of the rights, the third creator Cr3 acquires the updated percentages of the rights via the collaborative application 100 (S126), checks the acquired percentages of the rights (S128), and agrees on the updated percentages of the rights (S130). Similarly, the second creator Cr2 also acquires the updated percentages of the rights via the collaborative application 100 (S132), checks the acquired percentages of the rights (S134), and agrees on the updated percentages of the rights (S136).

Next, the first creator Cr1 registers the contract condition including the agreed percentages of the rights in the collaborative application 100 (S140). As a result, the collaborative application 100 can record information regarding the contract condition including the agreed percentages of the rights in the blockchain 300 via the management system 200 (S142). When the recording of the information regarding the contract condition in the blockchain 300 is completed, the collaborative application 100 may notify the first creator Cr1 "AA", the second creator Cr2 "BB", and the third creator Cr3 "CC" that the agreed contract condition have been established in the communication area 530, as in an image 532 illustrated in FIG. 8.

With the above-described operation, the information processing system 10 can perform the operation from the start of the collaborative project to the recording of the information regarding the contract condition in the blockchain 300. Therefore, the information processing system 10 can record the information regarding the contract condition including the percentages of the rights in the collaborative work in the blockchain 300.

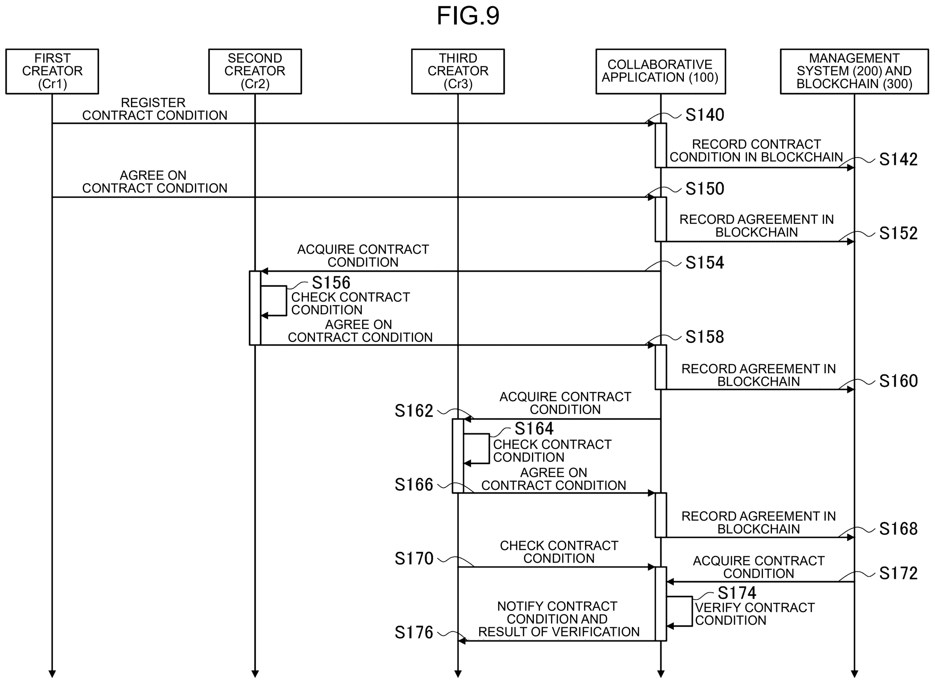

FIG. 9 is a sequence diagram illustrating an operation of the information processing system 10 to record information regarding agreement on the contract condition in the blockchain 300.

As illustrated in FIG. 9, after the recording of the contract condition in the blockchain 300 (S142), each of the first creator Cr1, the second creator Cr2, and the third creator Cr3 agrees on the contract condition.

Specifically, the first creator Cr1 records the information regarding the contract condition in the blockchain 300 (S142), and then enters agreement on the contract condition in the collaborative application 100 (S150). As a result, the collaborative application 100 can record the agreement of the first creator Cr1 on the contract condition in the blockchain 300 via the management system 200 (S152).

In addition, the second creator Cr2 acquires the contract condition via the collaborative application 100 (S154), checks the acquired contract condition (S156), and enters agreement on the contract condition in the collaborative application 100 (S158). As a result, the collaborative application 100 can record the agreement of the second creator Cr2 on the contract condition in the blockchain 300 via the management system 200 (S160). Similarly, the third creator Cr3 acquires the contract condition via the collaborative application 100 (S162), checks the acquired contract condition (S164), and enters agreement on the contract condition in the collaborative application 100 (S166). As a result, the collaborative application 100 can record the agreement of the third creator Cr3 on the contract condition in the blockchain 300 via the management system 200 (S168).

With the above-described operation, the information processing system 10 can record, in the blockchain 300, the agreement statuses of the creators Cr on the contract condition including the percentages of the rights in the collaborative work. Therefore, the information processing system 10 can guarantee that each of the creators Cr has agreed on the contract condition by referring to the information recorded in the blockchain 300.

Here, in a case where the third creator Cr3 checks the validity and integrity of the contract condition, the third creator Cr3 checks the contract condition via the collaborative application 100 (S170). The collaborative application 100 acquires the information regarding the contract condition from the blockchain 300 via the management system 200 (S172). Subsequently, the collaborative application 100 verifies the contract condition based on the information regarding the contract condition acquired from the blockchain 300 (S174). Thereafter, the collaborative application 100 notifies the contract condition and a result of verifying the contract condition to the third creator Cr3 (S176). According to this, the third creator Cr3 can check the contract condition including the percentages of the rights by referring to the information recorded in the blockchain 300 and check that the contract condition has been agreed and is valid.

### (4.2. Recording of collaborative work in blockchain)

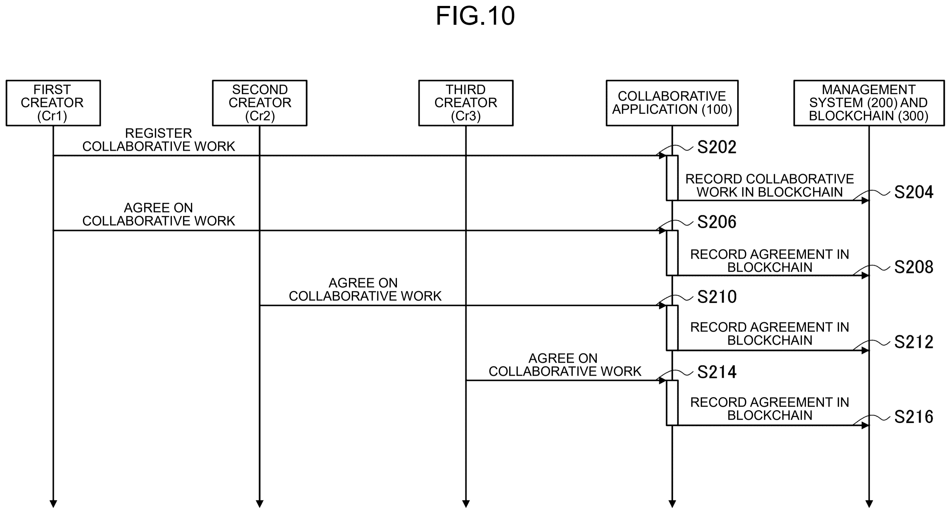

With reference to FIGS. 10 to 12, an operation of the information processing system 10 to record information regarding the final work of the collaborative work and agreement on the final work of the collaborative work in the blockchain 300 will be described.

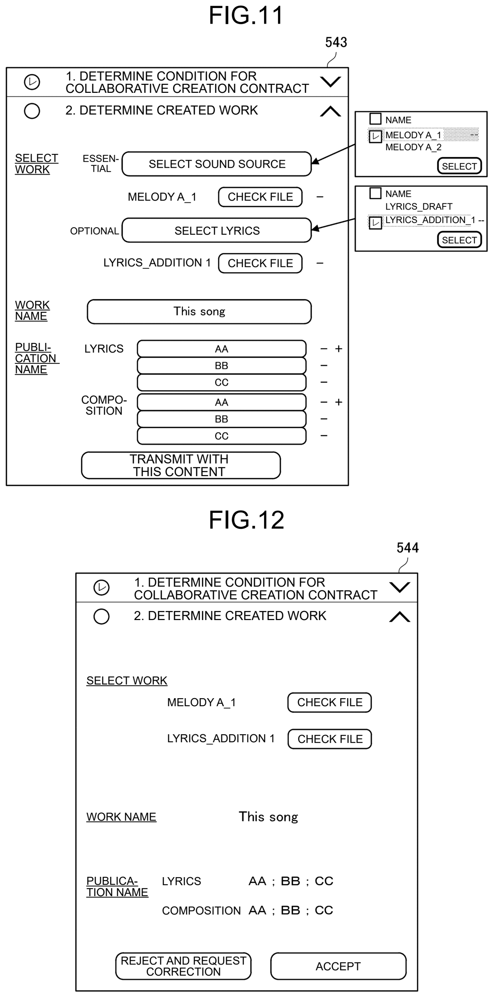

FIG. 10 is a sequence diagram illustrating the operation of the information processing system 10 to record the information regarding the final work of the collaborative work and the agreement on the final work in the blockchain 300. FIG. 11 is a diagram illustrating an example of an image displayed in the determination area 540 of the application image 500 in a case where the first creator Cr1 determines the final work. FIG. 12 is a diagram illustrating an example of an image displayed in the determination area 540 of the application image 500 in a case where the second creator Cr2 and the third creator Cr3 agree on or reject the final work.

As illustrated in FIG. 10, after the completion of the creation of the collaborative work, the first creator Cr1 determines the final work of the collaborative work, and registers the determined final work in the collaborative application 100 (S202). As a result, the collaborative application 100 can record the information regarding the final work of the collaborative work in the blockchain 300 via the management system 200 (S204).

For example, the first creator Cr1 may determine the final work of the collaborative work in an image 543 illustrated in FIG. 11. In the image 543 illustrated in FIG. 11, music is created as the collaborative work, and a sound source "melody A_1" and lyrics "lyrics_addition 1" of the music are determined as the final work. In addition, in the image 543 illustrated in FIG. 11, a work name "This song" of the music that is the collaborative work, the names "AA, BB, CC" of the lyricists who created the lyrics of the music, and the names "AA, BB, CC" of the composers who created the music are determined.

Subsequently, the first creator Cr1 enters agreement on the final work of the collaborative work in the collaborative application 100 (S206). As a result, the collaborative application 100 can record the agreement of the first creator Cr1 on the final work of the collaborative work in the blockchain 300 via the management system 200 (S208).

Furthermore, an image 544 illustrated in FIG. 12 is presented to the second creator Cr2 and the third creator Cr3. The second creator Cr2 and the third creator Cr3 can check the sound source "melody A_1" of the music and the lyrics "lyrics_addition 1" of the music that are the final work of the collaborative work, the work name "This song", the lyricists' names "AA, BB, CC", the composers' names "AA, BB, CC", and the like via the presented image 544.

The second creator Cr2 who has checked the final work of the collaborative work in the image 544 illustrated in FIG. 12 enters agreement on the final work of the collaborative work in the collaborative application 100 (S210). As a result, the collaborative application 100 can record the agreement of the second creator Cr2 on the final work in the blockchain 300 via the management system 200 (S212). Similarly, the third creator Cr3 who has checked the final work of the collaborative work in the image 544 illustrated in FIG. 12 enters agreement on the final work of the collaborative work in the collaborative application 100 (S214). As a result, the collaborative application 100 can record the agreement of the third creator Cr3 on the contract condition in the blockchain 300 via the management system 200 (S216).

With the above-described operation, the information processing system 10 can record the information regarding the final work of the collaborative work and the agreement statuses of the creators Cr regarding the final work in the blockchain 300. Therefore, the information processing system 10 can guarantee that each of the creators Cr has agreed on the final work of the collaborative work by referring to the information recorded in the blockchain 300.

### (4.3. Issuance of split sheet)

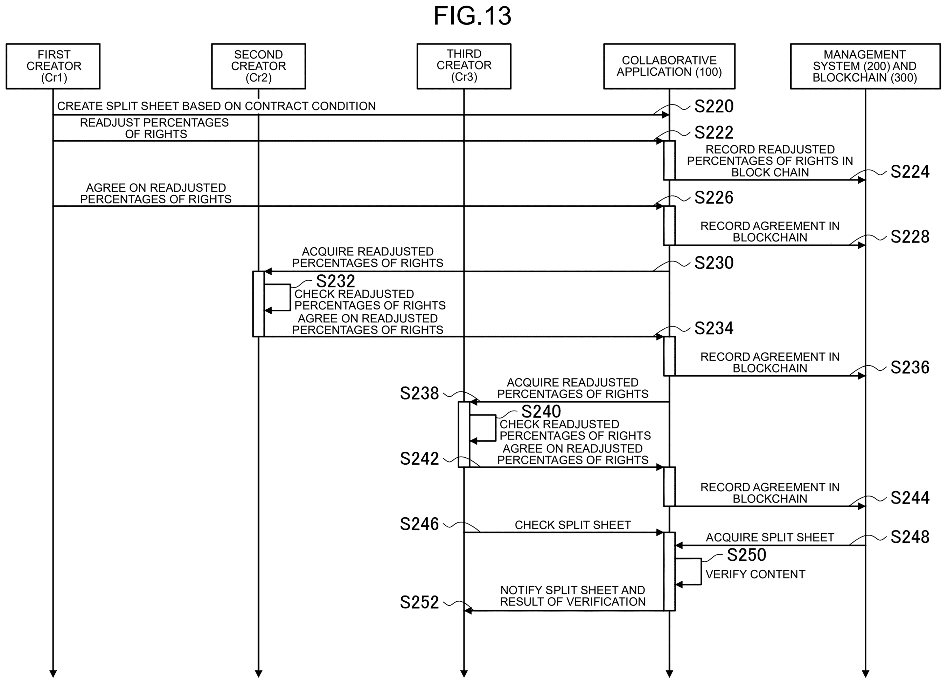

With reference to FIGS. 13 to 17, an operation of the information processing system 10 to create the split sheet in which the percentage of the rights of each of the creators Cr of the collaborative work is described will be described.

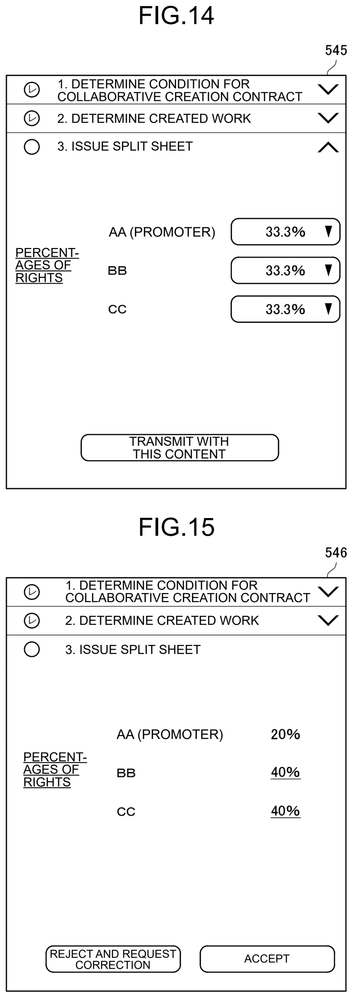

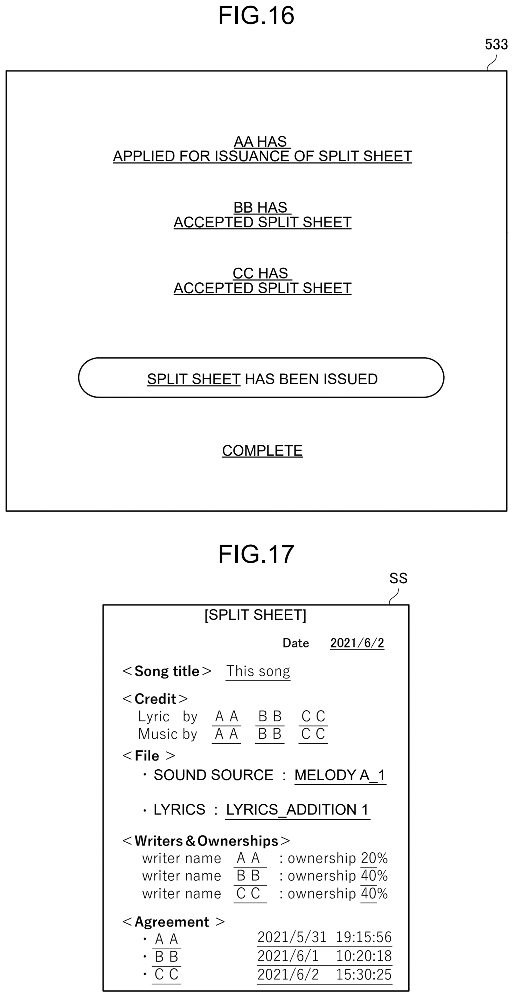

FIG. 13 is a sequence diagram illustrating the operation of the information processing system 10 to create the split sheet. FIG. 14 is a diagram illustrating an example of an image displayed in the determination area 540 of the application image 500 in a case where the first creator Cr1 readjusts the percentages of the rights during creation of the split sheet. FIG. 15 is a diagram illustrating an example of an image displayed in the determination area 540 of the application image 500 in a case where the second creator Cr2 and the third creator Cr3 agree on or reject the readjusted percentages of the rights. FIG. 16 is a diagram illustrating an example of an image displayed in the communication area 530 of the application image 500 for creation of the split sheet. FIG. 17 is a diagram illustrating an example of the split sheet to be created.

As illustrated in FIG. 13, first, the first creator Cr1 instructs the collaborative application 100 to create the split sheet based on the contract condition (S220).

Here, in a case where the contract condition is the "rights percentage readjustment type", the first creator Cr1 readjusts the percentages of the rights (S222). Specifically, as in an image 545 illustrated in FIG. 14, the first creator Cr1 "AA" can readjust the percentages of the rights of the first creator Cr1 "AA", the second creator Cr2 "BB", and the third creator Cr3 "CC" from the original equal percentages of "33.3%" at the stage of creating the split sheet. For example, the first creator Cr1 "AA" may change the percentage of the rights of the first creator Cr1 "AA" to "20%", the percentage of rights of the second creator Cr2 "BB" to "40%", and the percentage of the rights of the third creator Cr3 "CC" to "40%" from the original equal percentages of "33.3%".

After the readjustment of the percentages of the rights, the readjusted percentages of the rights are recorded in the blockchain 300 via the collaborative application 100 (S224). Thereafter, the first creator Cr1 enters agreement on the readjusted percentages of the rights in the collaborative application 100 (S226). As a result, the collaborative application 100 can record the agreement of the first creator Cr1 on the readjusted percentages of the rights in the blockchain 300 via the management system 200 (S228).

The second creator Cr2 acquires the readjusted percentages of the rights via the collaborative application 100 (S230), and checks the readjusted percentages of the rights (S232). Similarly, the third creator Cr3 acquires the readjusted percentages of the rights via the collaborative application 100 (S238), and checks the readjusted percentages of the rights (S240).

For example, the readjusted percentages of the rights entered by the first creator Cr1 in an image 546 illustrated in FIG. 15 are presented to the second creator Cr2 and the third creator Cr3. For example, in the image 546 illustrated in FIG. 15, "20%" is entered as the percentage of the rights of the first creator Cr1 "AA", "40%" is entered as the percentage of the rights of the second creator Cr2 "BB", and "40%" is entered as the percentage of the rights of the third creator Cr3 "CC". The second creator Cr2 and the third creator Cr3 can indicate whether to accept or reject the presented readjusted percentages of the rights by selecting either "accept" or "reject and request correction" in the image 546 illustrated in FIG. 15.

When the second creator Cr2 agrees on the readjusted percentages of the rights (S234), the collaborative application 100 can record the agreement of the second creator Cr2 on the readjusted percentages of the rights in the blockchain 300 via the management system 200 (S236). Similarly, when the third creator Cr3 agrees on the readjusted percentages of the rights (S242), the collaborative application 100 can record the agreement of the third creator Cr3 on the readjusted percentages of the rights in the blockchain 300 via the management system 200 (S244).

In a case where agreement of the first creator Cr1, the second creator Cr2, and the third creator Cr3 on the percentages of the rights are recorded in the blockchain 300, the collaborative application 100 may notify the first creator Cr1 "AA", the second creator Cr2 "BB", and the third creator Cr3 "CC" that the split sheet has been created in the communication area 530, as in an image 533 illustrated in FIG. 16.

In a case where the contract condition is the "pre-contract rights percentage priority type", the operations in steps S222 to S224 are skipped. In such a case, the collaborative application 100 can create the split sheet based on the agreement of the first creator Cr1, the second creator Cr2, and the third creator Cr3 on the original percentages of the rights.

As a result, the collaborative application 100 can create the split sheet based on the percentages of the rights agreed by each of the creators Cr.

For example, the collaborative application 100 can create a split sheet SS illustrated in FIG. 17. In the split sheet SS illustrated in FIG. 17, the creation date is described and the work name "This song", the sound source "melody A_1", the lyrics "lyrics addition 1", the names "AA, BB, CC" of the lyricists, and the names "AA, BB, CC" of the composers are described as information regarding the collaborative work. In addition, in the split sheet SS, the percentages of the rights of the plurality of creators "AA, BB, CC" and time stamps of agreement of the plurality of creators "AA, BB, CC" are described.

The information regarding the collaborative work, the information regarding the percentages of the rights of the plurality of creators Cr, and the information regarding the agreement on the percentages of the rights of the plurality of creators Cr are recorded on the blockchain 300. Therefore, the collaborative application 100 can guarantee the validity and integrity of the content of the split sheet SS by referring to the information recorded on the blockchain 300.

For example, in a case where the third creator Cr3 checks the validity and integrity of the content of the split sheet, the third creator Cr3 checks the split sheet via the collaborative application 100 (S246). The collaborative application 100 acquires information regarding the content of the split sheet from the blockchain 300 via the management system 200 (S248). Subsequently, the collaborative application 100 verifies the content of the split sheet based on the information acquired from the blockchain 300 (S250). Thereafter, the collaborative application 100 notifies the third creator Cr3 of the split sheet and a result of verifying the content of the split sheet (S252). According to this, the third creator Cr3 can check the content of the split sheet and check that the content of the split sheet has been agreed and is valid, based on the information recorded in the blockchain 300.

### (4.4. Case where minimum percentage of rights is guaranteed)

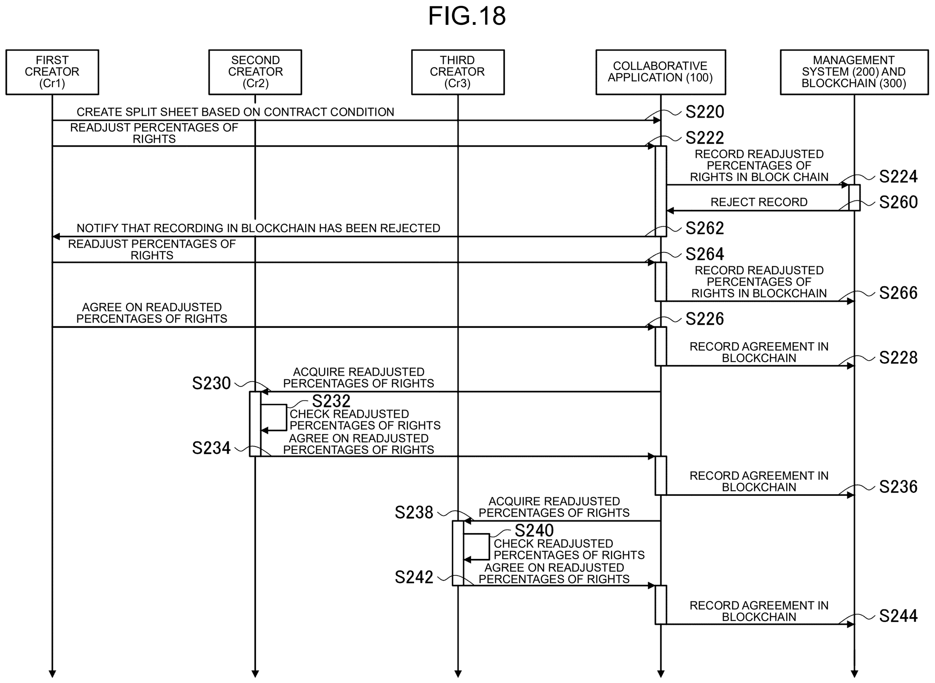

With reference to FIG. 18, an operation of the information processing system 10 to create the split sheet in which the percentage of the rights of each of the creators Cr of the collaborative work is described in a case where the minimum percentage of the rights is guaranteed will be described. FIG. 18 is a sequence diagram illustrating the operation of the information processing system 10 to create the split sheet in a case where the minimum percentage of the rights is guaranteed.

In the contract condition of the "minimum rights percentage guaranteed type", the minimum percentage of the rights is set in addition to the percentage of the rights of each of the creators Cr before the collaborative creation. The minimum percentage of the rights is a minimum guaranteed percentage of the rights even if the percentage of the rights of each of the creators Cr is readjusted after the collaborative creation.

In such a case, before the collaborative creation, the collaborative application 100 records the percentage of the rights of each of the creators Cr in the blockchain 300, and records a smart contract for rejecting the setting of a percentage of the rights lower than the minimum percentage of the rights in the blockchain 300. According to this, the collaborative application 100 can cause the smart contract to prevent a percentage of the rights lower than the minimum guaranteed percentage of the rights from being recorded in the blockchain 300 in the readjustment of the percentage of the rights of each of the creators Cr after the collaborative creation.

For example, in the contract condition of the "minimum rights percentage guaranteed type", as illustrated in FIG. 18, the first creator Cr1 instructs the collaborative application 100 to create the split sheet based on the contract condition (S220). In this case, in a case where the percentages or the rights are readjusted (S222), recording of information regarding the readjusted percentages of the rights in the blockchain 300 via the collaborative application 100 is attempted (S224).

However, in a case where a readjusted percentage of the rights is lower than the minimum percentage of the rights in the smart contract recorded in the blockchain 300, the recording of the information regarding the readjusted percentages of the rights in the blockchain 300 is rejected (S260). Subsequently, the collaborative application 100 notifies the first creator Cr1 that the recording of the readjusted percentages of the rights in the blockchain 300 has been rejected (S262).

As a result, the first creator Cr1 readjusts each of the percentages of the rights such that the percentages of the rights are higher than or equal to the minimum percentage of the rights (S264), and information regarding the readjusted percentages of the rights is recorded in the blockchain 300 via the collaborative application 100 (S266).

Thereafter, the first creator Cr1 enters agreement on the readjusted percentages of the rights in the collaborative application 100 (S226). As a result, the collaborative application 100 can record the agreement of the first creator Cr1 on the readjusted percentages of the rights in the blockchain 300 via the management system 200 (S228). Furthermore, similarly to the operation illustrated in FIG. 13, the second creator Cr2 and the third creator Cr3 agree on the readjusted percentages of the rights after acquiring and checking the readjusted percentages of the rights. As a result, the collaborative application 100 can record the agreement of the second creator Cr2 and the third creator Cr3 on the readjusted percentages of the rights in the blockchain 300 via the management system 200.

According to the above-described operation, the collaborative application 100 can cause the smart contract to prevent a percentage of the rights lower than the minimum guaranteed percentage of the rights from being recorded in the blockchain 300 in the readjustment of the percentage of the rights of each of the creators Cr after the collaborative creation.

### (4.5. Appendix)

Note that, in a case where the number of creators Cr increases or decreases in the middle of the collaborative creation, the collaborative application 100 can adjust a percentage of the rights of each of the creators Cr after the increase or decrease by using the following method.

For example, in the "rights percentage readjustment type" in which the percentages of the rights are readjusted after the collaborative creation and the "minimum rights percentage guaranteed type", the collaborative application 100 can readjust the percentages of the rights of the creators Cr whose number has increased and decreased, after the collaborative creation.

Note that, in a case where the total of percentages of the rights of creators Cr after an increase in the number of creators Cr exceeds 100% as a percentage due to the increase in the number of creators Cr, the collaborative application 100 may calculate the percentage of the rights of each of the creators Cr by regarding the percentages as ratios. For example, when the total of the percentages of the rights after the increase is 120%, a value obtained by dividing the percentage of the rights of each of the creators Cr by the total (120%/100% = 1.2) of the percentages of the rights after the increase may be used as the percentage of the rights of each of the creators Cr. Similarly, regarding the minimum percentage of the rights guaranteed in the "minimum rights percentage guaranteed type", a value obtained by dividing the minimum percentage of the rights by the total (120%/100% = 1.2) of the percentages of the rights after the increase may be used as the minimum percentage of the rights.

On the other hand, in the "pre-contract rights percentage priority type" in which the percentage of the rights of each of the creators Cr is determined before the collaborative creation, the collaborative application 100 can determine the percentages of the rights of the creators Cr whose number has increased and decreased, by newly launching a project or restarting determination of and agreement on the contract condition including the percentages of the rights. However, in a case where the project is newly launched again, it is desirable that a history such as a timeline before the number of creators Cr increases or decreases can be taken over in the newly launched project.

In addition, similarly to the "pre-contract rights percentage priority type", in each of the "rights percentage readjustment type" and the "minimum rights percentage guaranteed type", in order to set the percentages of the rights of the creators Cr whose number has increased and decreased, the collaborative application 100 may newly launch a project, or may determine and agree on the contract condition including the percentages of the rights.

Note that, in a case where the percentage of the rights of each of the creators Cr is readjusted or redetermined based on an increase or decrease in the number of creators Cr, the readjusted or redetermined percentages of the rights and the agreement of each of the creators Cr on the percentages of the rights are recorded in the blockchain 300 via the management system 200. That is, it is desirable that the determination and change of the percentages of the rights in the collaborative work and the agreement statuses of the creators Cr are recorded in the blockchain 300 each time in order to leave a history on the blockchain 300.

### <5. Hardware Configuration>

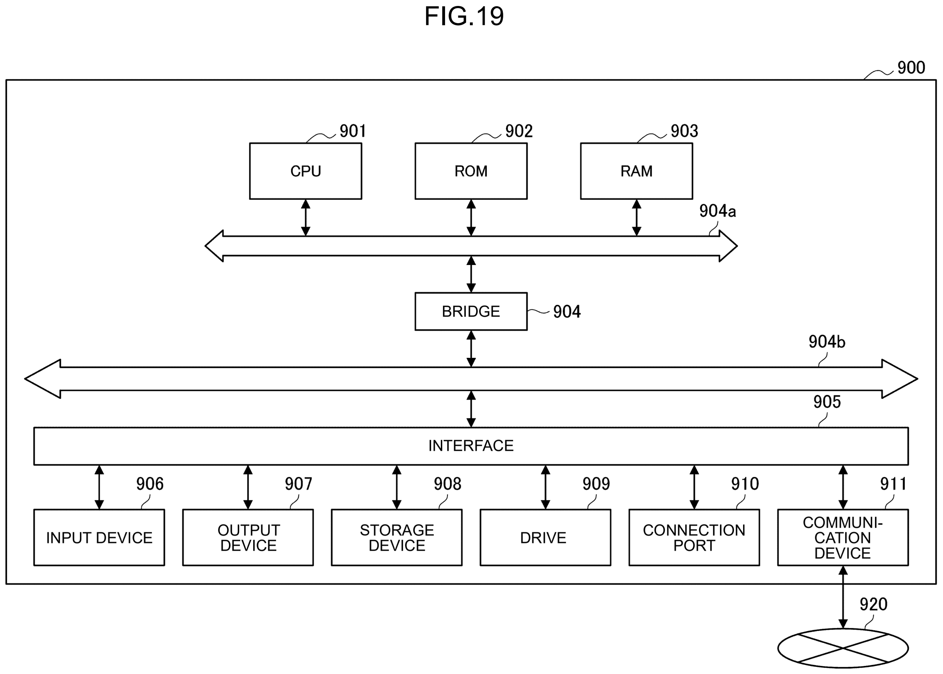

A hardware configuration of an information processing apparatus 900 that runs the collaborative application 100 according to the present embodiment will be described with reference to FIG. 19. FIG. 19 is a block diagram illustrating an example of the hardware configuration of the information processing apparatus 900 in which the collaborative application 100 runs.

The functions of the collaborative application 100 according to the present embodiment may be implemented by cooperation of software and hardware included in the information processing apparatus 900 described below. The functions of the timeline generation unit 120, the acquisition unit 130, the information generation unit 140, and the agreement generation unit 150 may be executed by a CPU 901, for example.

The collaborative application 100 according to the present embodiment may be, for example, a native application that runs on an information processing terminal possessed by each of the creators Cr, or may be a web application that runs on an information processing server accessed by the information processing terminal possessed by each of the creators Cr. Furthermore, the collaborative application 100 according to the present embodiment may be a hybrid application that runs in conjunction on the information processing server and the information processing terminals.

As illustrated in FIG. 19, the information processing apparatus 900 includes the central processing unit (CPU) 901, a read only memory (ROM) 902, and a random access memory (RAM) 903.

Furthermore, the information processing apparatus 900 may further include a host bus 904a, a bridge 904, an external bus 904b, an interface 905, an input device 906, an output device 907, a storage device 908, a drive 909, a connection port 910, or a communication device 911. The information processing apparatus 900 may include a processing circuit such as a digital signal processor (DSP) or an application specific integrated circuit (ASIC) instead of the CPU 901 or together with the CPU 901.

The CPU 901 functions as an arithmetic processing device or a control device, and controls an operation in the information processing apparatus 900 in accordance with various programs recorded in a removable recording medium installed in the ROM 902, the RAM 903, the storage device 908, or the drive 909. The ROM 902 stores a program to be used by the CPU 901, operation parameters, and the like. The RAM 903 temporarily stores a program to be used in the execution of the CPU 901, parameters to be used in the execution, and the like.

The CPU 901, the ROM 902, and the RAM 903 are mutually connected by the host bus 904a capable of high-speed data transmission. The host bus 904a is connected to the external bus 904b such as a Peripheral Component Interconnect/Interface (PCI) bus via the bridge 904, and the external bus 904b is connected to various components via the interface 905.

The input device 906 is, for example, a device that receives an input from a user, such as a mouse, a keyboard, a touch panel, a button, a switch, or a lever. Note that the input device 906 may be a microphone or the like that detects user's voice. The input device 906 may be, for example, a remote control device using an infrared ray or another radio wave, or may be an external connection device compatible with an operation of the information processing apparatus 900.

The input device 906 further includes an input control circuit that outputs, to the CPU 901, an input signal generated based on information input by the user. The user can input various types of data to the information processing apparatus 900 by operating the input device 906 or can instruct the information processing apparatus 900 to perform a processing operation by operating the input device 906.

The output device 907 is a device capable of visually or aurally presenting information acquired or generated by the information processing apparatus 900 to the user. The output device 907 may be, for example, a display device such as a liquid crystal display (LCD), a plasma display panel (PDP), an organic light emitting diode (OLED) display, a hologram, or a projector, may be a sound output device such as a speaker or a headphone, or may be a printing device such as a printer device. The output device 907 can output information obtained by processing of the information processing apparatus 900 as video such as text or an image or sound such as voice or audio.

The storage device 908 is a data storage device configured as an example of a storage unit of the information processing apparatus 900. The storage device 908 may include, for example, a magnetic storage device such as a hard disk drive (HDD), a semiconductor storage device, an optical storage device, a magneto-optical storage device, or the like. The storage device 908 can store a program to be executed by the CPU 901, various data, various data acquired from the outside, or the like.

The drive 909 is a reading or writing device for a removable recording medium such as a magnetic disk, an optical disk, a magneto-optical disk, or a semiconductor memory, and is built in or externally attached to the information processing apparatus 900. For example, the drive 909 can read information recorded in the attached removable recording medium and output the information to the RAM 903. Furthermore, the drive 909 can write a record to the attached removable recording medium.

The connection port 910 is a port for directly connecting an external connection device to the information processing apparatus 900. The connection port 910 may be, for example, a universal serial bus (USB) port, an IEEE1394 port, a small computer system interface (SCSI) port, or the like. Furthermore, the connection port 910 may be an RS-232C port, an optical audio terminal, a high-definition multimedia interface (HDMI) (registered trademark) port, or the like. The connection port 910 is connected to an external connection device, so that various data can be transmitted and received between the information processing apparatus 900 and the external connection device.

The communication device 911 is a communication interface including, for example, a communication device for connecting to a network 920. The communication device 911 may be, for example, a communication card for wired or wireless local area network (LAN), Wi-Fi (registered trademark), Bluetooth (registered trademark), or wireless USB (WUSB). Furthermore, the communication device 911 may be a router for optical communication, a router for asymmetric digital subscriber line (ADSL), a modem for various types of communication, or the like.

The communication device 911 can transmit and receive signals and the like using a predetermined protocol such as TCP/IP to and from the Internet or another communication device, for example. Furthermore, the network 920 connected to the communication device 911 is a network connected by wire or wirelessly, and may be, for example, an Internet communication network, a home LAN, an infrared communication network, a radio wave communication network, a satellite communication network, or the like.

Note that it is also possible to create a program for causing hardware such as the CPU 901, the ROM 902, and the RAM 903 built in a computer to implement functions equivalent to those of the information processing apparatus 900 described above. In addition, a computer-readable recording medium in which the program is recorded can also be provided.

### <6. Modification>

In the above-described embodiment, the example has been described in which the information processing system 10 records agreement of each of the creators in creating the collaborative work (copyrighted collaborative work). Here, the information processing system 10 may further record different information. For example, the information processing system 10 may receive registration of a work created by each creator himself/herself from each creator who intends to participate in the project for creating the collaborative work prior to issuance of the project. In other words, the information processing system 10 has a function of recruiting a co-creator and a function of verifying the experience of the co-creator for the start of collaborative creation.

### (6.1. Background)

First, as a background in which the information processing system 10 has the above-described functions, a creation system for the collaborative work will be described.

In recent years, an activity style of each creator has greatly changed due to the spread of networks. In particular, there is a tendency that there are more activities of independent creators who do not belong to publishing companies, associations, and the like, and creators (referred to as DIY creators or the like) who do not belong to record companies and the like and perform distribution by themselves. On the other hand, as described in the embodiment, collaborative creation of collaboratively creating music is also increasing. For example, as systems for collaborative creation, music and lyrics may be separately created, and music and lyrics may be created by a plurality of persons in cooperation. Under such circumstances, creation modes have been diversified, for example, collaborative creation that has been performed by people who know each other is performed by unknown creators both in and outside Japan due to development of networks.

However, in reality, it is difficult for a creator (hereinafter, referred to as a "promoter" for distinction) who requests collaborative creation to find a creator who is another creator involved in the collaborative creation and has desired ability. For example, the promoter has no choice but to get in touch with a creator by chance by browsing some website or the like and contacting the creator. In addition, in a case where creators know each other, there are many cases where the creators know past works of the creators, preferred genres, and the like. However, in a case where the promoter gets to know a creator by chance, the promotor may not have information regarding the creator. In this case, the promoter can request the creator to present a work before proposing the collaborative creation, but there may be a situation in which the creator is inexperienced and presents a work of another person as if the work was his/her own work, and thus there is a lack of means to reliably trust the creator. For example, there is a possibility that a creator who does not output personal information such as a real name, a creator who uses a temporarily valid contact address (so-called discard address), a creator who has impersonated a famous creator, and the like are mixed among participation applicants.

A function according to a modification has been made in view of the above-described problem, and the information processing system 10 provides means for checking in advance whether a work presented by a participation applicant is his/her own work before the promoter starts the collaborative creation. That is, the information processing system 10 reduces troubles after the start of the collaborative creation by verifying the ability of a participation applicant as a creator in advance. Specifically, the function according to the modification prevents falsification or impersonation of a work by verifying a work of each creator registered in the blockchain based on non-falsifiable information such as a non-fungible token (NFT). As a result, the information processing system 10 can construct a mechanism in which creators can be connected to each other with security, and can provide an environment in which appropriate collaborative creation can be performed.

### (6.2. Pre-registration of work in blockchain)

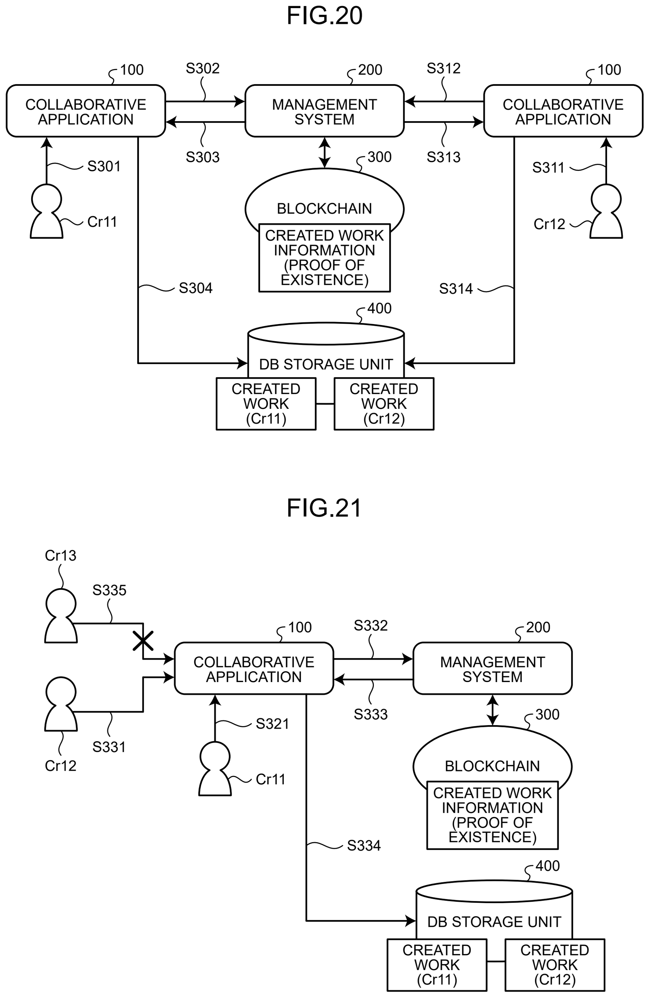

The modification will be described with reference to FIG. 20 and subsequent drawings. FIG. 20 is a block diagram illustrating an outline of information processing according to the modification.

FIG. 20 schematically illustrates processing in which each of a first creator Cr11 and a second creator Cr12 creates any work as his/her own work and registers the work in the management system 200. Note that the components such as the collaborative application 100, the management system 200, the blockchain 300, and the DB storage unit 400 illustrated in FIG. 20 are common to those in the embodiment.

In the modification, the first creator Cr11 and the second creator Cr12 register their own information in the management system 200 in advance before creating the collaborative work. In addition, the first creator Cr11 and the second creator Cr12 appropriately perform processing of registering the created work in the management system 200. As a result, when a certain promoter starts a collaborative project, the promoter can determine whether a participation applicant is a creator who has registered a work in the management system 200.

### (6.3. Aspect of collaborative creation)

FIG. 20 illustrates an example of a processing procedure. When the first creator Cr11 creates a work, the first creator Cr11 requests the collaborative application 100 to register the work (step S301). Note that the request for the work registration is not limited to the collaborative application 100, and may be made via an arbitrary created work registration service (web service or the like used by the creator).

When acquiring the request for the work registration, the collaborative application 100 sends information regarding the work and the creator to the management system 200 (step S302). The management system 200 registers the work in the blockchain 300. In this case, the management system 200 issues proof of existence as proof that the first creator Cr11 has created the work. For example, the management system 200 issues a token such as an NFT as proof of existence by using the smart contract of the blockchain 300.

The proof of existence is recorded, for example, in a wallet of the blockchain 300 associated with the first creator Cr11. As a result, the first creator Cr11 can manage his/her non-falsifiable proof of existence by himself/herself. Note that the NFT is an example, and the management system 200 may use any information as long as the information can be proof of existence (such as an ID that can uniquely identify information).

Upon receiving the proof of existence issued from the management system 200 (step S303), the collaborative application 100 stores the work created by the first creator Cr11 in the DB storage unit 400 as a created work (step S304).

In addition, the second creator Cr12 also registers his/her own work in the management system 200 according to a procedure similar to that used by the first creator Cr11 (steps S311 to S314).

In this manner, each of the creators who use the information processing system 10 manages the proof of existence that he/she has definitely created the work, and registers the work on the information processing system 10 in advance. That is, a creator can prove, through daily creation activities, his/her own creation activity at the time of collaborative creation described later by recording his/her own work in the information processing system 10 functioning as a created work registration service.

Next, an example in which proof of existence of a work is used when a collaborative project is launched will be described with reference to FIG. 21. FIG. 21 is a block diagram illustrating an outline of collaborative creation according to the modification.

In the example illustrated in FIG. 21, first, the first creator Cr11 transmits a request for starting the collaborative project to the collaborative application 100 (step S321). That is, in the example illustrated in FIG. 21, the first creator Cr11 is a promoter of the project.

In this case, the first creator Cr11 presents, to the collaborative application 100, the work registered in the information processing system 10 in advance and the NFT, which is the proof of existence of the work, prior to the start of the project.

Upon receiving the request, the collaborative application 100 inquires the management system 200 about the presented NFT (step S332). The management system 200 verifies the NFT recorded in the blockchain 300. When the NFT of the first creator Cr11 is verified, the management system 200 returns the result to the collaborative application 100 (step S333). Furthermore, the collaborative application 100 identifies the work associated with the verified NFT in the DB storage unit 400 (step S334).

As described above, the collaborative application 100 can verify the work that the first creator Cr11 who launched the project has worked on so far, that the work has been definitely created by the first creator Cr11, and the like. Subsequently, the collaborative application 100 recruits a participation applicant who desires to participate in the project with a display indicating that the work has been verified.

It is assumed that the second creator Cr12 who has browsed the project transmits a request for requesting participation in the project to the collaborative application 100 (step S331).

In this case, the collaborative application 100 verifies an NFT presented by the second creator Cr12, similarly to the verification processing performed for the first creator Cr11. Then, the collaborative application 100 identifies the work that the second creator Cr12 has worked on so far, and verifies that the work has been definitely created by the second creator Cr12.

Since the second creator Cr12 presents the NFT of the work and expresses his/her intention to participate in the project after proving his/her work, the first creator Cr11 can grasp the technical strength and the field of expertise of the second creator Cr12 at this point of time. As a result, the first creator Cr11 can determine whether to perform the project together with the second creator Cr12.

On the other hand, it is assumed that a third creator Cr13 who has browsed the project and has no work registration history so far transmits a request for participation in the project to the collaborative application 100, similarly to the second creator Cr12 (step S335).

In this case, the collaborative application 100 tries to verify an NFT of the third creator Cr13 similarly to the verification processing performed for the second creator Cr12, but cannot verify the NFT of the third creator Cr13 in a case where no past work registration history is present. Therefore, the collaborative application 100 adds information indicating that a work of the third creator Cr13 cannot be verified to the third creator Cr13.

Since the third creator Cr13 has not registered a work of the third creator Cr13, the first creator Cr11 cannot grasp the technical strength and the field of expertise of the third creator Cr13 at this point of time. Therefore, the first creator Cr11 can reject participation of the third creator Cr13 in the project.

In this manner, the first creator Cr11 as the promoter can accurately grasp a creator who requests to participate in the project and whose work has been registered. Note that, since the project is not performed only by the promoter but is performed by all participation applicants who desire to participate, whether the persons are permitted to participate in the project may be determined not by the determination of the first creator Cr11 but by voting by the participation applicants. That is, each of the participation applicants who desire to participate in the project votes to permit a creator who desires to perform the project together to participate in the project while viewing works of the other participation applicants and grasping technical fields in which the participation applications excel. The collaborative application 100 certifies a creator who has obtained a certain number or more of votes as a member who is permitted to participate in the project, and officially creates the project. The voting may be performed using, for example, a mechanism such as a governance token in a decentralized autonomous organization (DAO). Furthermore, processing after the creation of the project may be common to the embodiment as illustrated in FIG. 4, for example.

As described above, according to the information processing system 10 according to the modification, since a platform using the blockchain 300 is provided to creators, an individual can safely establish an organization such as a creation committee and secure a human resource without intervention of a reliable company or the like. In addition, as described in the embodiment, since the information processing system 10 provides the content of the contract and a reward in advance and records the information in the blockchain 300, it is possible to protect individual creators from falsification after the start of the project or breach of the contract. Furthermore, the creators can participate in the creation or support the project without disclosing personal information. In this case, the information processing system 10 can cause the promoter or the like to check the background, the specialty, and the like of the participants by using past works recorded in the blockchain 300 as evidence.

### (6.4. Example of Processing Procedure According to Modification)

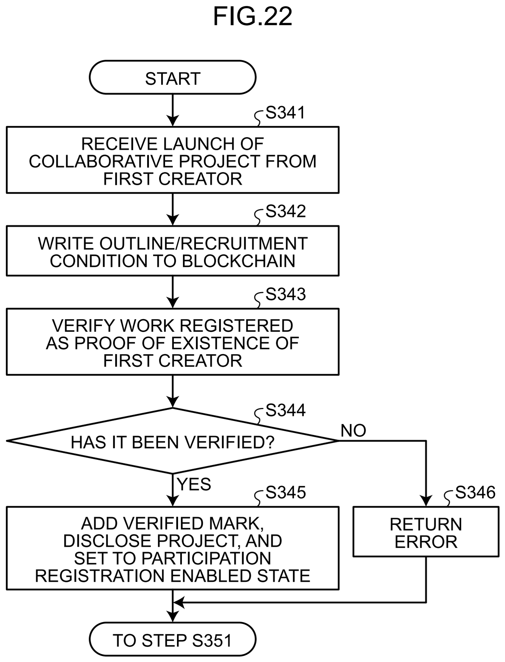

Next, an example of a processing procedure from the start of the project to reward distribution will be described with reference to FIGS. 22 to 25. FIG. 22 is a flowchart (1) illustrating the processing procedure according to the modification. Note that, in the following, in order to simplify the description, the subject of the processing will be described as the information processing system 10, but in practice, each component (the collaborative application 100, the management system 200, or the like) constituting the information processing system 10 performs the processing.

First, the information processing system 10 receives a request for launching the collaborative project from the first creator who is the promoter (step S341). The information processing system 10 records an outline of the project and a recruitment condition specified by the first creator in the DB storage unit 400 or the like, and writes the outline and the recruitment condition to the blockchain 300 so that the outline and the recruitment condition are not to be falsified (step S342).

Subsequently, the information processing system 10 verifies the existence of several works presented by the first creator among works registered by the first creator as proof of existence, for example (step S343). The information processing system 10 determines whether the proof of existence has been verified (step S344). Specifically, the information processing system 10 verifies NFTs of the works, and verifies whether or not the works have been certainly registered.

If the proof of existence has been verified (step S344; Yes), the information processing system 10 adds a verified mark to the first creator, discloses the project, and sets the project to a participation registration enabled state (step S345).

On the other hand, if the proof of existence of the first creator has not been verified (step S344; No), the information processing system 10 returns an error such as rejection of creation of the project on the assumption that there is a problem in reliability of the first creator (step S346).

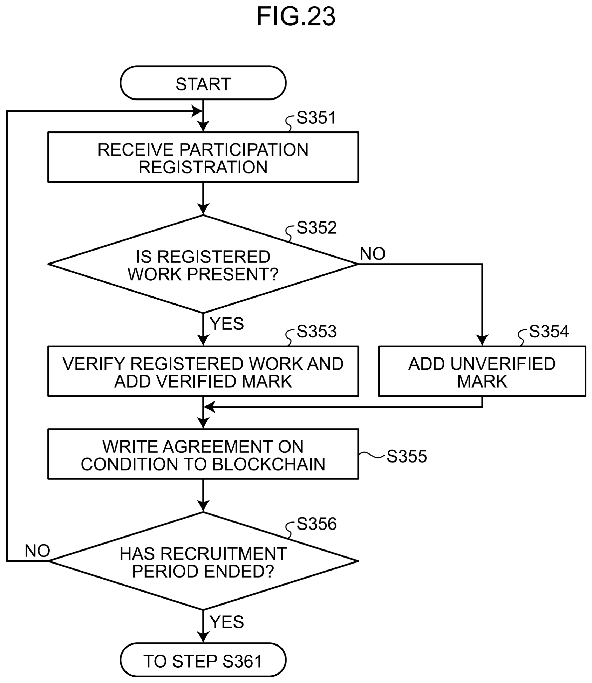

Next, FIG. 23 will be described. FIG. 23 is a flowchart (2) illustrating the processing procedure according to the modification.

The information processing system 10 receives participation registration from each of the creators for the disclosed project (step S351). For example, the information processing system 10 displays the outline of the project and the recruitment condition, and provides information regarding participation, such as registration of their own work examples, necessity to agree on the recruitment condition, and the like.

Then, for each of the creators whose participation registration has been received, the information processing system 10 determines whether a registered work is present, based on the registration ID or the like of each of the creators (step S352).

If the registered work is present (step S352; Yes), the information processing system 10 verifies the registered work based on an NFT or the like, and adds a verified mark if the registered work has been verified (step S353). On the other hand, if the registered work is not present (step S352; No), the information processing system 10 adds an unverified mark to a creator whose work has not been registered (step S354). Note that the information processing system 10 may similarly add an unverified mark to a creator whose work has been registered but whose proof of existence such as an NFT has not been verified.

Thereafter, similarly to the embodiment, the information processing system 10 writes, to the blockchain 300, agreement of each of the creators on the condition in a case where the creator participates in the project (step S355).

Thereafter, the information processing system 10 determines whether a project recruitment period has ended (step S356). If the recruitment period has not ended (step S356; No), the information processing system 10 continues the recruitment. On the other hand, if the recruitment period has ended (step S356; Yes), the information processing system 10 ends the recruitment.

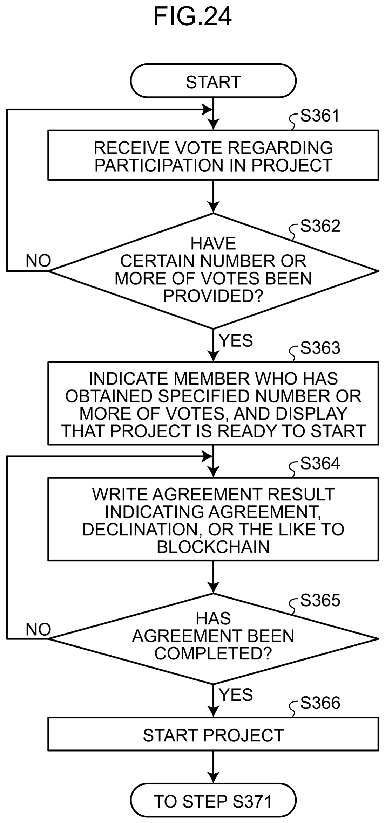

Next, FIG. 24 will be described. FIG. 24 is a flowchart (3) illustrating the processing procedure according to the modification.

When the project recruitment period ends, the information processing system 10 receives a vote regarding participation in the project (step S361). For example, the information processing system 10 receives a vote that has been provided from each of all the creators who have transmitted a request for participation in the project, and indicates a creator who is desired to participate in the project among the other creators.

Thereafter, the information processing system 10 determines whether a certain number or more of votes have been provided (step S362). For example, the information processing system 10 determines that the certain number or more of votes has been provided when voting by all of the creators has ended or a set voting period has ended. If more than the certain number or more of votes have not been provided (step S362; No), the information processing system 10 continues to receive a vote.

On the other hand, if the certain number or more of votes have been provided (step S362; Yes), the information processing system 10 indicates a member who has obtained a specified number or more of votes on a user interface of the collaborative application 100 or the like, and displays that the project is ready to start (step S363).

Thereafter, the information processing system 10 receives, from each of creators who have been permitted to participate in the project, an agreement result indicating whether or not each of the creators has agreed to start the project between the creators or declines to participate in the project, and writes the received results to the blockchain 300 (step S364).

The information processing system 10 determines whether or not the agreement of all the creators participating in the project has been completed (step S365). If the agreement has not been completed (step S365; No), the information processing system 10 waits until the agreement is completed. Note that the information processing system 10 may estimate that a creator whose intention of agreement cannot been confirmed within a certain period has declined to participate in the project.

On the other hand, if the agreement has been completed (step S365; Yes), the information processing system 10 starts the project (step S366).

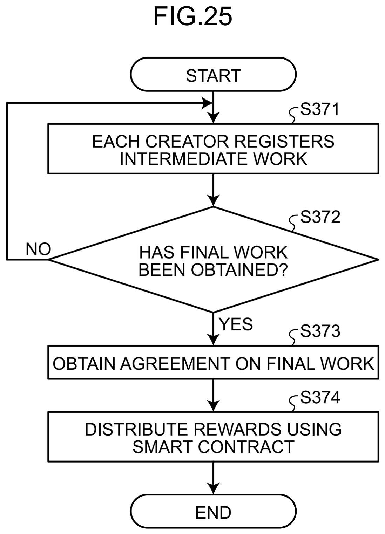

Next, FIG. 25 will be described. FIG. 25 is a flowchart (4) illustrating the processing procedure according to the modification.

While the project is in progress, the information processing system 10 registers an intermediate work uploaded by each creator in the collaborative application 100 (step S371). Thereafter, the information processing system 10 determines whether the final work has been obtained (step S372). For example, the information processing system 10 determines that the final work has been obtained when the completion of the project is received from the promoter. If the final work has not been obtained (step S372; No), the information processing system 10 continues the project.

On the other hand, if the final work has been obtained (step S372; Yes), the information processing system 10 obtains agreement on the final work from the creators participating in the project (step S373). Then, the information processing system 10 distributes a reward to each of the creators based on the initial agreement using the smart contract of the blockchain 300 (step S374).

### (6.5. System Configuration According to Modification)

The system according to the modification may have a configuration similar to that of the information processing system 10 according to the embodiment. For example, the processing according to the modification is performed by the collaborative application 100. However, the subject of the processing is not limited to the collaborative application 100, and the processing according to the modification may be performed by the collaborative application 100, the management system 200, and the like in cooperation. Furthermore, the platform that receives the registration of the work of each of the creators is not limited to the collaborative application 100, and may be a predetermined created work registration service or the like.

### (6.6. Effects of Modification)

As described above, the program (for example, the collaborative application 100) according to the modification causes the computer to function as an acquisition unit (for example, the acquisition unit 130) and an information generation unit (for example, the information generation unit 140). The acquisition unit acquires information regarding a work independently created by each of the creators prior to the creation of the collaborative work. The information generation unit generates information for recording the acquired work in the blockchain, and generates proof information for proving the existence of the work. For example, the information generation unit uses an NFT in the blockchain as the proof information.

Furthermore, the acquisition unit acquires a request for creating the collaborative work from the first creator (promoter). When the request is acquired, the information generation unit verifies the proof information of the work registered in advance by the first creator. When the proof information is verified, the information generation unit generates information regarding the project for the collaborative work based on the request.

Furthermore, the acquisition unit acquires a request for requesting participation in the project from the second creator (each creator other than the promoter) who is a creator requesting participation in the project. When the request for participation is acquired, in a case where a work registered in advance by the second creator is present, the information generation unit verifies proof information of the work registered in advance by the second creator and generates information indicating that the work has been verified, and in a case where no work is registered in advance by the second creator, the information generation unit generates information indicating that the work has not been verified.

Furthermore, the acquisition unit acquires a vote indicating whether or not the second creator is permitted to participate in the project. The information generation unit generates information for displaying the second creator who is permitted to participate in the project based on the result of the vote.

Furthermore, the acquisition unit may acquire information indicating whether or not the second creator is permitted to participate in the project from the first creator. The information generation unit generates, based on the information acquired from the first creator, information for displaying the second creator who is permitted to participate in the project.

As described above, since the program according to the modification issues proof of existence based on the work registration of the creators and an NFT in advance prior to the creation of the project, the ability or the like of a creator who intends to participate in the project can be secured. In addition, by specifying in advance registration of a created work in a condition for the participation in the project, the promoter can exclude in advance an impersonating creator, a creator who does not meet the purpose of the project, and the like, and start the project with a member desired by the promoter.

Furthermore, since the project is managed in the blockchain, for example, the creators can register various types of content (for example, a rough sketch, a setting, picture content, an NG take, and the like) obtained in the process of collaborative creation as intermediate works. That is, each creator can register, as a by-product of the final work, content that does not become the final work but can become valuable content among, for example, fans, and thus can enjoy benefits based on these values. For example, in a case where each creator obtains a large amount of benefit from the final work, there is a possibility that each creator can enjoy the benefit based on the intermediate works in accordance with the outline of the project. As described above, according to the system of the present disclosure, even an independent creator such as an individual can receive appropriate management of privacy information while obtaining a reward over a long period of time, so that it is possible to continue positive creative activities with security.

Although the preferred embodiments of the present disclosure have been described above in detail with reference to the accompanying drawings, the technical scope of the present disclosure is not limited to the examples. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. That is, the technology according to the present disclosure can exhibit other effects obvious to those skilled in the art from the description of the present specification together with or instead of the above effects.

Note that the following configurations also belong to the technical scope of the present disclosure.
(1) A program for causing a computer to function as:
   an acquisition unit that acquires information regarding a percentage of rights of each of creators of a collaborative work via a chat between the creators;
   an information generation unit that generates information for recording the information regarding the percentages of the rights in a blockchain; and
   an agreement generation unit that generates an agreement regarding the percentages of the rights based on the information regarding the percentages of the rights and an agreement status of each of the creators regarding the percentages of the rights.
(2) The program according to (1), wherein the information generation unit further generates information for further recording, in the blockchain, information regarding agreement of each of the creators on the percentages of the rights before creation of the collaborative work.
(3) The program according to (1) or (2), wherein
   when the percentages of the rights are readjusted after creation of the collaborative work, the information generation unit generates information for further recording information regarding the readjusted percentages of the rights in the blockchain.
(4) The program according to (3), wherein the information generation unit generates information for further recording, in the blockchain, information on agreement of each of the creators on the readjusted percentages of the rights.
(5) The program according to (3) or (4), wherein a minimum guaranteed value of each of the creators for the percentages of the rights is set for the percentages of the rights recorded in the blockchain before the creation of the collaborative work.
(6) The program according to (5), wherein when a percentage among the percentages of the rights readjusted after the creation of the collaborative work is lower than the minimum guaranteed value, the recording of the information regarding the percentages of the rights in the blockchain is rejected by a smart contract.
(7) The program according to any one of (1) to (6), wherein a content of the agreement is verifiable via the information obtained from the blockchain.
(8) The program according to any one of (1) to (7), wherein information regarding the created collaborative work is further recorded in the blockchain.
(9) The program according to (8), wherein information regarding agreement of each of the creators on the created collaborative work is further recorded in the blockchain.
(10) The program according to any one of (1) to (9), further causing the computer to
   further function as a timeline generation unit that generates a timeline indicating exchange in the chat in time series.
(11) The program according to (10), wherein data is further transmitted and received between the creators in the timeline.
(12) The program according to any one of (1) to (11), wherein
   when the number of the creators of the collaborative work is increased or decreased, the acquisition unit reacquires information regarding the percentage of the rights of each of the creators, and
   the information generation unit generates information for further recording the reacquired information regarding the percentages of the rights in the blockchain.
(13) The program according to (1), wherein
   the acquisition unit acquires information regarding a work independently created by each of the creators prior to creation of the collaborative work, and
   the information generation unit generates information for recording the acquired works in the blockchain, and generates proof information for proving existence of the works.
(14) The program according to (13), wherein
   the acquisition unit acquires, from a first creator, a request for creating the collaborative work,
   the information generation unit verifies proof information of a work previously registered by the first creator when the request is acquired, and generates information regarding the project for the collaborative work based on the request when the proof information is verified.
(15) The program according to (14), wherein
   the acquisition unit acquires a request for requesting participation in the project from a second creator who is a creator requesting participation in the project, and
   when the request for the participation is acquired, in a case where a work registered in advance by the second creator is present, the information generation unit verifies proof information of the work registered in advance by the second creator and generates information indicating that the work has been verified, and in a case where the work registered in advance by the second creator is not present, the information generation unit generates information indicating that the work is not verified.
(16) The program according to (15), wherein
   the acquisition unit acquires a vote indicating whether or not the second creator is permitted to participate in the project, and
   the information generation unit generates, based on a result of the vote, information for displaying the second creator who is permitted to participate in the project.
(17) The program according to (15) or (16), wherein
   the acquisition unit acquires, from the first creator, information indicating whether or not the second creator is permitted to participate in the project, and
   the information generation unit generates, based on the information acquired from the first creator, information for displaying the second creator who is permitted to participate in the project.
(18) The program according to any one of (13) to (17), wherein
   the information generation unit uses a non-fungible token as the proof information in the blockchain.
(19) An information processing method by a computer, comprising:
   acquiring information regarding a percentage of rights of each of creators of a collaborative work via a chat between the creators;
   generating information for recording information regarding the percentages of the rights in a blockchain; and
   generating an agreement regarding the percentages of the rights based on the information regarding the percentages of the rights and an agreement status of each of the creators regarding the percentages of the rights.
(20) An information processing apparatus comprising:
   an acquisition unit that acquires information regarding a percentage of rights of each of creators of a collaborative work via a chat between the creators;
   an information generation unit that generates information for recording the information regarding the percentages of the rights in a blockchain; and
   an agreement generation unit that generates an agreement regarding the percentages of the rights based on the information regarding the percentages of the rights and an agreement status of each of the creators regarding the percentages of the rights.

### Reference Signs List

- 10: INFORMATION PROCESSING SYSTEM
- 100: COLLABORATIVE APPLICATION
- 120: TIMELINE GENERATION UNIT
- 130: ACQUISITION UNIT
- 140: INFORMATION GENERATION UNIT
- 150: AGREEMENT GENERATION UNIT
- 200: MANAGEMENT SYSTEM
- 300: BLOCKCHAIN
- 400: DB STORAGE UNIT
- 500: APPLICATION IMAGE
- 510: PROJECT SELECTION AREA
- 520: MEMBER DISPLAY AREA
- 530: COMMUNICATION AREA
- 540: DETERMINATION AREA
- Cr: CREATOR
- SS: SPLIT SHEET

## Claims

1. A program for causing a computer to function as:
an acquisition unit that acquires information regarding a percentage of rights of each of creators of a collaborative work via a chat between the creators;
an information generation unit that generates information for recording the information regarding the percentages of the rights in a blockchain; and
an agreement generation unit that generates an agreement regarding the percentages of the rights based on the information regarding the percentages of the rights and an agreement status of each of the creators regarding the percentages of the rights.

2. The program according to claim 1, wherein the information generation unit further generates information for further recording, in the blockchain, information regarding agreement of each of the creators on the percentages of the rights before creation of the collaborative work.

3. The program according to claim 1, wherein
when the percentages of the rights are readjusted after creation of the collaborative work, the information generation unit generates information for further recording information regarding the readjusted percentages of the rights in the blockchain.

4. The program according to claim 3, wherein the information generation unit generates information for further recording, in the blockchain, information on agreement of each of the creators on the readjusted percentages of the rights.

5. The program according to claim 3, wherein a minimum guaranteed value of each of the creators for the percentages of the rights is set for the percentages of the rights recorded in the blockchain before the creation of the collaborative work.

6. The program according to claim 5, wherein when a percentage among the percentages of the rights readjusted after the creation of the collaborative work is lower than the minimum guaranteed value, the recording of the information regarding the percentages of the rights in the blockchain is rejected by a smart contract.

7. The program according to claim 1, wherein a content of the agreement is verifiable via the information obtained from the blockchain.

8. The program according to claim 1, wherein information regarding the created collaborative work is further recorded in the blockchain.

9. The program according to claim 8, wherein information regarding agreement of each of the creators on the created collaborative work is further recorded in the blockchain.

10. The program according to claim 1, further causing the computer to
further function as a timeline generation unit that generates a timeline indicating exchange in the chat in time series.

11. The program according to claim 10, wherein data is further transmitted and received between the creators in the timeline.

12. The program according to claim 1, wherein
when the number of the creators of the collaborative work is increased or decreased, the acquisition unit reacquires information regarding the percentage of the rights of each of the creators, and
the information generation unit generates information for further recording the reacquired information regarding the percentages of the rights in the blockchain.

13. The program according to claim 1, wherein
the acquisition unit acquires information regarding a work independently created by each of the creators prior to creation of the collaborative work, and
the information generation unit generates information for recording the acquired works in the blockchain, and generates proof information for proving existence of the works.

14. The program according to claim 13, wherein
the acquisition unit acquires, from a first creator, a request for creating the collaborative work,
the information generation unit verifies proof information of a work previously registered by the first creator when the request is acquired, and generates information regarding the project for the collaborative work based on the request when the proof information is verified.

15. The program according to claim 14, wherein
the acquisition unit acquires a request for requesting participation in the project from a second creator who is a creator requesting participation in the project, and
when the request for the participation is acquired, in a case where a work registered in advance by the second creator is present, the information generation unit verifies proof information of the work registered in advance by the second creator and generates information indicating that the work has been verified, and in a case where the work registered in advance by the second creator is not present, the information generation unit generates information indicating that the work is not verified.

16. The program according to claim 15, wherein
the acquisition unit acquires a vote indicating whether or not the second creator is permitted to participate in the project, and
the information generation unit generates, based on a result of the vote, information for displaying the second creator who is permitted to participate in the project.

17. The program according to claim 15, wherein
the acquisition unit acquires, from the first creator, information indicating whether or not the second creator is permitted to participate in the project, and
the information generation unit generates, based on the information acquired from the first creator, information for displaying the second creator who is permitted to participate in the project.

18. The program according to claim 13, wherein
the information generation unit uses a non-fungible token as the proof information in the blockchain.

19. An information processing method by a computer, comprising:
acquiring information regarding a percentage of rights of each of creators of a collaborative work via a chat between the creators;
generating information for recording information regarding the percentages of the rights in a blockchain; and
generating an agreement regarding the percentages of the rights based on the information regarding the percentages of the rights and an agreement status of each of the creators regarding the percentages of the rights.

20. An information processing apparatus comprising:
an acquisition unit that acquires information regarding a percentage of rights of each of creators of a collaborative work via a chat between the creators;
an information generation unit that generates information for recording the information regarding the percentages of the rights in a blockchain; and
an agreement generation unit that generates an agreement regarding the percentages of the rights based on the information regarding the percentages of the rights and an agreement status of each of the creators regarding the percentages of the rights.
